# EUROPEAN PATENT APPLICATION

(11) **EP 3 002 181 A1**
(43) Date of publication of application: **06.04.2016**
(21) Application number: 14187595.5
(22) Date of filing: 03.10.2014
(51) Int. Cl.: B62D 55/30, F16F 1/32

(54) **Impact absorption device**

(71) Applicant: Caterpillar, Inc., Peoria, IL 61629 (US)
(72) Inventor: Necib, Jamel, 38140 RIVES SUR FURE (FR)
(74) Representative: Modiano, Micaela Nadia

(57) **Abstract**

An impact absorption device (10) is disclosed for absorbing impacts in a track roller frame. The impact absorption device (10) comprising: a resilient element (12) having a first side (18) and a second side (20), the resilient element having an impact zone (26) extending between the first side and the second side; a cover assembly (14) positioned at the first side surrounding the impact zone, the cover assembly defining a first void (56) aligned with the impact zone; and a spacer assembly (16) positioned at the second side surrounding the impact zone, the spacer assembly defining a second void (64) aligned with the impact zone wherein the resilient element is retained between the cover assembly and spacer assembly such that the impact zone is resiliently deformable through the second void.

## Description

### Technical Field

This disclosure relates to track type machines, in particular to track roller frames for track type machines and more particularly to shock absorption mechanisms for track roller frames.

### Background

Track type machines may be commonly used in applications where traction is critical or low ground pressure is important. Current track-driven machines use an endless track and chain assembly to provide load distribution and propulsion within a track system. Examples of track type machines may be dozers, excavators, and skid-steer loaders.

Track type machines may consist of a track roller frame, a plurality of rollers, one or more idler wheels, a driving wheel or sprocket, and a track chain. The track chain may have track shoes that are connected to links to form an endless loop which encircles the track roller frame, the idler wheel(s) and the driving wheel. Track type machines may have an undercarriage that supports an internal combustion engine, and left and right track roller frames that transfer power from the engine to a ground surface. The left and right track roller frames may be rigidly mounted to a machine frame and may be free to pivot in a vertical direction about the mounting location.

The track roller frames may be connected to the machine frame by a pivot shaft. Each of the track roller frames may include a front idler wheel and a rear idler wheel and a roller around which the track chain may be positioned. The track roller frames may have a rugged construction that exhibit a high degree of structural integrity in order to support the track type machine.

Conventionally, a high-tension coil spring may be used to absorb a frontal impact to the tracks and the front idler of a track-type machine. The coil spring may be typically preloaded such that it is under a high amount of tension when installed in order to be effective. The coil spring may be in a part-compressed state when installed to effectively provide tension to the tracks by having some minimum tension. When a frontal impact force exceeds a predetermined threshold, the coil spring may further compress so as to allow the front idler to be temporarily pushed back and thereby absorb energy of the impact. When the impact force no longer exceeds the predetermined threshold, the resilient nature of the coil spring may allow the front idler to return to its original position.

The present disclosure is directed, at least in part, to improving or overcoming one or more aspects of the prior art system.

### Brief Summary of the Invention

In a first aspect, the present disclosure describes an impact absorption comprising: a resilient element having a first side and a second side, the resilient element having an impact zone extending between the first side and the second side; a cover assembly positioned at the first side surrounding the impact zone, the cover assembly defining a first void aligned with the impact zone; and a spacer assembly positioned at the second side surrounding the impact zone, the spacer assembly defining a second void aligned with the impact zone wherein the resilient element is retained between the cover assembly and spacer assembly such that the impact zone is resiliently deformable through the second void.

In a second aspect, the present disclosure describes a track roller frame comprising a housing; an impact absorption device mounted in the housing; and a hydraulic adjuster mounted in the housing, the hydraulic adjuster being axially coupled to the impact absorption device through the first void.

### Brief Description of the Drawings

The foregoing and other features and advantages of the present disclosure will be more fully understood from the following description of various embodiments, when read together with the accompanying drawings, in which:
Fig. 1 is an isometric view of a first embodiment of an impact absorption device according to the present disclosure;
Fig. 2 is an isometric view of a first embodiment of a resilient element of the impact absorption device of Fig. 1;
Fig. 3 is an isometric view of a second embodiment of the resilient element of the impact absorption device of Fig. 1;
Fig. 4 is an isometric view of a third embodiment of the resilient element of the impact absorption device of Fig. 1;
Fig. 5 is an isometric view of a fourth embodiment of the resilient element of the impact absorption device of Fig. 1;
Fig. 6 is an isometric view of a fifth embodiment of the resilient element of the impact absorption device of Fig. 1;
Fig. 7 is an isometric view of a sixth embodiment of the resilient element of the impact absorption device of Fig. 1;
Fig. 8 is an isometric view of a second embodiment of an impact absorption device according to the present disclosure;
Fig. 9 is an exploded view of the impact absorption device of Fig. 8;
Fig. 10 is a side view of the impact absorption device coupled to a hydraulic adjuster according to the present disclosure;

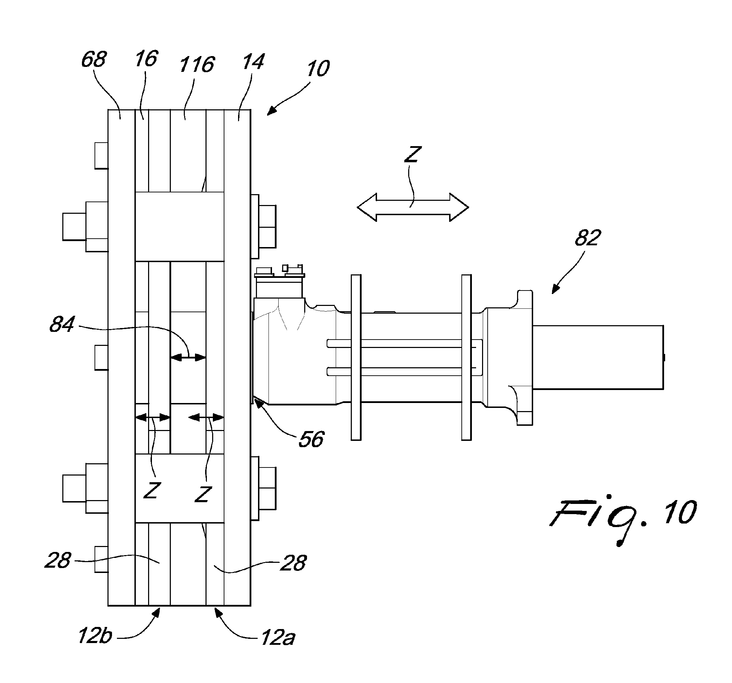

Fig. 10 is a graph illustrating the relationship between two springs when subjected to an impact force; and

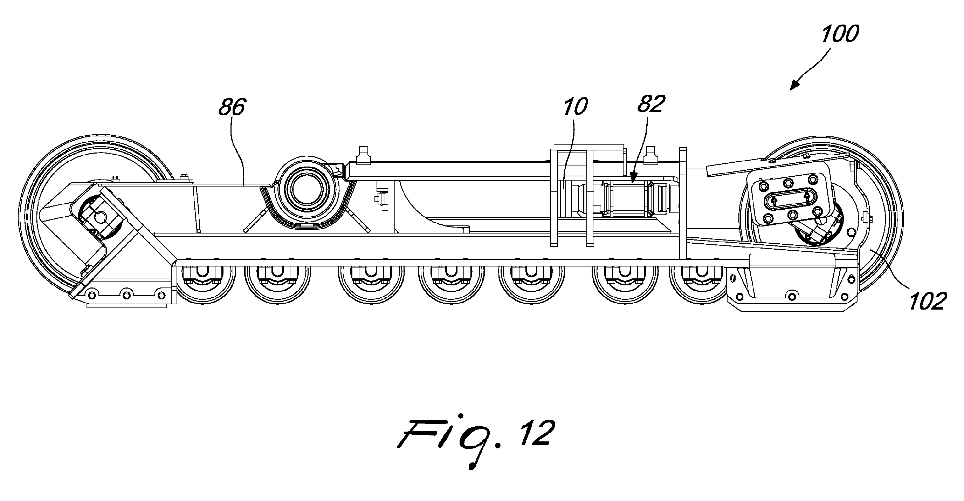

Fig. 12 is a side view of the impact absorption device mounted with a hydraulic cylinder (track link adjuster) in a track roller frame of a track type machine according to the present disclosure.

### Detailed Description

This disclosure generally relates to an impact absorption device **10** for assembly onto a track type machine. The impact absorption device **10** may absorb impacts and mud packing in the track type machine.

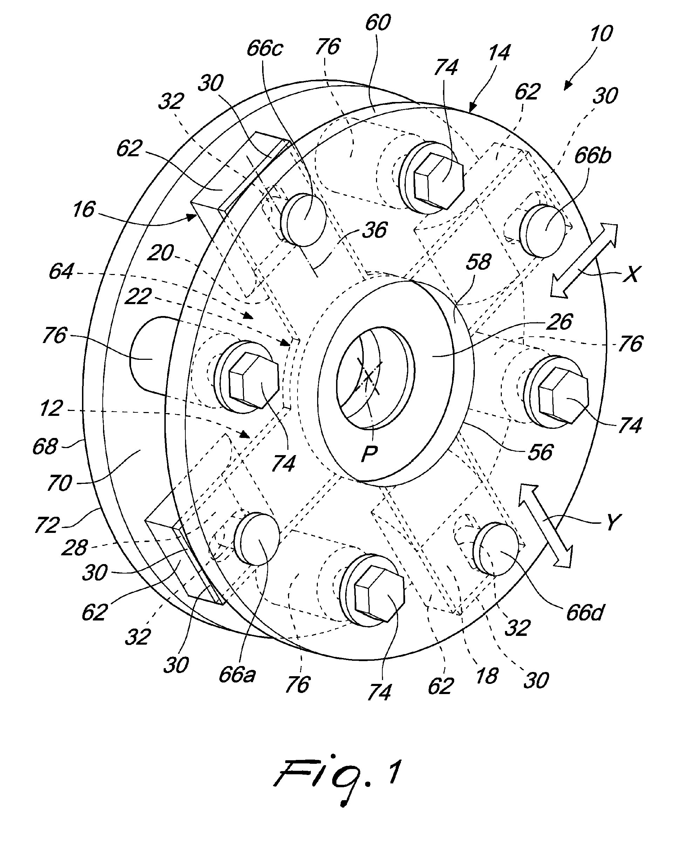

Fig. 1 illustrates the impact absorption device **10.** The impact absorption device **10** may comprise a resilient element **12**, a cover assembly **14** and a spacer assembly **16.** The resilient element **12** may be positioned between the cover assembly **14** and the spacer assembly **16.**

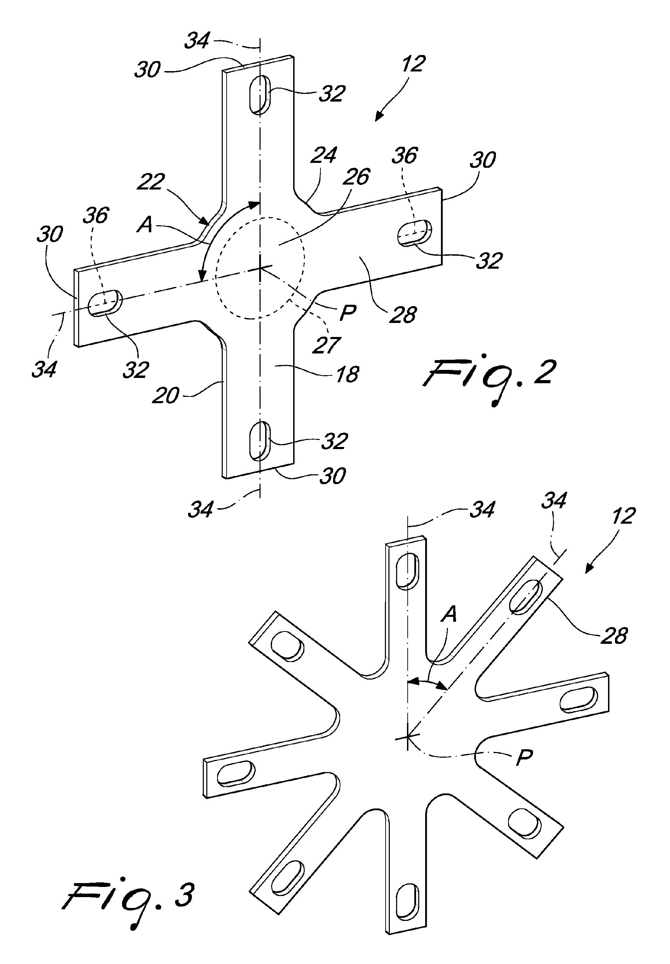

With reference to Fig. 2, the resilient element **12** may have a first side **18** and a second side **20.** The resilient element **12** may be flat and may lie on a plane. The resilient element **12** may be resiliently deformable in a direction orthogonal to the plane.

Resilient element **12** may have an impact portion **22.** The boundary of the impact portion **22** may be edge **24** of the resilient element **12.** In an embodiment, boundary of the impact portion **22** may be spaced from the edge **24.** The entire boundary of the impact portion **22** may be equidistant from the edge **24.** Impact portion **22** may be circular in shape. Impact portion **22** may be flat. Resilient element **12** may have a centre point **P** positioned at the impact portion **22.** Impact portion **22** may receive an impact that may cause the resilient element **12** to undergo a resilient deformation. The impact portion **22** may be resiliently deformable in a direction orthogonal to the plane on which the resilient element **12** lies.

The impact portion **22** may have an impact zone **26.** The impact zone **26** may extend between the first side **18** and the second side **20.** Impact zone **26** may be centrally positioned on the resilient element **12.** Impact zone **26** may be centrally positioned on the impact portion **22.** Impact zone **26** may receive an impact that may cause the resilient element **12** to undergo a resilient deformation. The impact zone **26** may be resiliently deformable in a direction orthogonal to the plane on which the resilient element **12** lies.

The boundary **27** of the impact zone **26** may coincide with the boundary of the impact portion **22.** Boundary **27** of the impact zone **26** may be positioned at the edges **24.** In an embodiment, the boundary **27** of the impact zone **26** may be spaced from boundary of the impact portion **22.** Boundary **27** of the impact zone **26** may be spaced from the edges **24.** The entire boundary **27** of the impact zone **26** may be spaced equidistantly from boundary of the impact portion **22.** Centre of impact zone **26** may be the centre point **P.**

Resilient element **12** may have a plurality of branches **28.** Branches **28** may aid in the resilient deformation of the resilient element **12.** The number of branches **28** may be selected on the basis of the required load of the resilient element **12.** The number of branches **28** may be selected on the basis of the required resilience of the resilient element **12.**

The plurality of radially extending branches **28** may be positioned between the cover assembly **14** and spacer assembly **16.** Branches **28** may be radially distributed about the centre point **P** of the resilient element **12.** Branches **28** may extend radially from the centre point **P.** Branches **28** may be connected to the edges **24** of the resilient element **12.** The branches **28** may be connected to the impact portion **22** at an end. Branches **28** may be free ends **30.** Free ends **30** may be remote from the impact portion **22.**

Branches **28** may be mutually angularly spaced. Each branch **28** may be angularly spaced from the adjacent branch **28.** The longitudinal axis **34** of each branch **28** may be angularly spaced from the longitudinal axis **34** of the adjacent branch **28.** The longitudinal axis **34** of each branch **28** may intersect with the impact zone **26.** The longitudinal axes **34** of the branches **28** may intersect at the centre point **P** of the resilient element **12.**

Resilient element **12** may have branches **28** that are aligned at opposite sides of the impact portion **22.** The opposite branches **28** may be positioned on opposite sides of the impact portion **22** and may have the respective longitudinal axes **34** being linearly aligned. The linearly aligned longitudinal axes **34** may form an axis extending across the resilient element **12.** The linearly aligned longitudinal axes **34** may bisect the resilient element **12.**

The first and second sides **18**, **20** of the resilient element **12** may extend across the impact portion **22** and the branches **28.** First and second sides **18, 20** at the impact portion **22** may be planar with the first and second sides **18**, **20** at the branches **28.** Longitudinal axis **34** of each branch **28** may be planar with the impact zone **26.**

In an embodiment, first and second sides **18**, **20** at the branches **28** may be inclined relative to the first and second sides **18**, **20** at the impact portion **22.** Longitudinal axis **34** of each branch **28** may be inclined relative to the impact zone **26.** The branches **28** may be inclined in a direction such that the upon impact the impact portion **22** may flex further away from the braches **28.** In an alternative embodiment, the branches **28** may be inclined in a direction such that the impact portion **22** may flex towards the braches **28.** The branches **28** may be inclined in a direction such that the impact portion **22** may flex towards the branches **28** at the onset of impact absorption.

The resilient element **12** may have at least one slot **32.** The slot **32** may extend through the resilient element **12.** The slot **32** may be remote from the impact portion **22.** Slot **32** may be positioned in the branch **28.** Slot **32** may be located adjacent the free end **30.**

Slot **32** may be aligned with the longitudinal axis **34** in branch **28.** Slot **32** may be positioned on the branch **28** such that the longitudinal axis **34** may cross the slot **32.** Slot **32** may be axially extended along the longitudinal axis **34.** Longitudinal axis **34** may axially intersect the slot **32.** Longitudinal axis **34** may bisect the slot **32.**

Slot **32** may have a central axis **36** crossing the centre thereof. The central axis **36** may be parallel to the longitudinal axis **34.** Central axis **36** may be aligned with the longitudinal axis **34** in branch **28.**

In an embodiment, the resilient element **12** may have a plurality of slots **32** provided in a plurality of branches **28.** Slots **32** in opposite branches **28** may be mutually aligned. Central axes **36** in slots **32** located in opposite branches **28** may be mutually parallel. Central axes **36** in slots **32** located in opposite branches **28** may be mutually linearly aligned.

With reference to Fig. 2, in a first embodiment, the resilient element **12** may have four branches **28.** Longitudinal axis **34** of each branch **28** may have an angular separation **A** of 90 degrees from the longitudinal axis **34** of the adjacent branch **28.**

With reference to Fig. 3, in a second embodiment, the resilient element **12** may have eight branches **28.** Longitudinal axis **34** of each branch **28** may have an angular separation **A** of 45 degrees from the longitudinal axis **34** of the adjacent branch **28.**

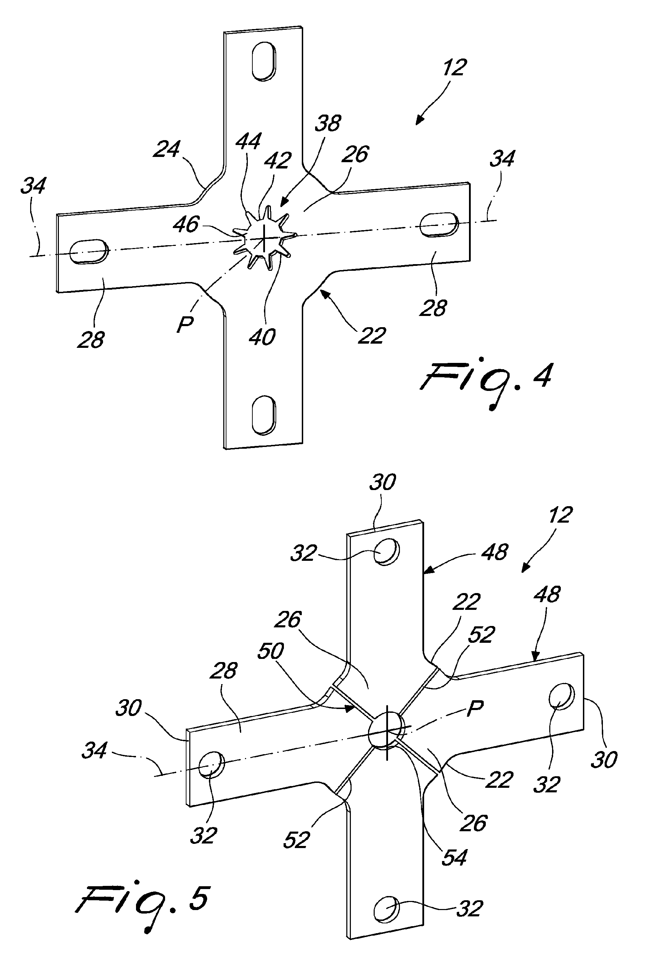

With reference to Fig. 4, in a third embodiment, the resilient element **12** may have an aperture **38.** Aperture **38** may aid in the resilient deformation of the resilient element **12.** Aperture **38** may enable specific localised deformation of the resilient element **12.**

The aperture **38** may be positioned in the impact portion **22.** Aperture **38** may be positioned in the impact zone **26.** The aperture **38** may be centrally positioned in the impact zone **26.** Longitudinal axes **34** may intersect the aperture **38.** Aperture **38** may be defined by an edge **42.** Aperture **38** may enable deformations along edge **42.**

Centre point **P** may be positioned in the aperture **38.** In an embodiment, the resilient element **12** may have a series of notches **40.** Notches **40** may communicate with the aperture **38** through openings **46.** Notches **40** may be located along the edge **42.** Notches **40** may extend into the resilient element **12.** Notches **40** may extend laterally into the resilient element **12.** Notches **40** may extend into the impact portion **22.** Notches **40** may extend laterally into the impact portion **22.**

Notches **40** may be substantially v-shaped with the respective apices **44.** The apices **44** may be opposite respective openings **46.** Apices **44** may be orientated away from edge **42.** Apices **44** may be orientated towards edges **24.** Apices **44** may be orientated towards branches **28.** The resilient element **12** with the aperture **38** and the notches **40** may have a plurality of branches **28** as described with respect to the embodiments of Fig. 2 and Fig. 3.

With reference to Fig. 5, in a fourth embodiment, the resilient element **12** is formed of a plurality of plates **48.** Each plate **48** may be a separate and an independent portion of the resilient element **12.** The plates **48** may be configured such that portions of a plate **48** may be aligned with adjacent plates **48.** Plates **48** may be arranged about a virtual centre point **P.** Plates **48** may be arranged radially about the virtual centre point **P.** Plates **48** may be arranged such that the longitudinal axis **34** of each branch **28** may intersect with virtual centre point **P**.

Each plate **48** may comprise a branch **28.** The impact portion **22** may be divided between the plates **48.** Each plate **48** may comprise a portion of the impact portion **22.** Each plate **48** may comprise an equal portion of the impact portion **22.** The impact zone **26** may be divided between the plates **48.** Each plate **48** may comprise a portion of the impact zone **26.** Each plate **48** may comprise an equal portion of the impact zone **26.**

In an embodiment, slots **32** may be formed as circles. Each plate **48** may not be able to move in a direction along the longitudinal axis **34** of each branch **28.** Each plate **48** may be movable in a rotation about a rotational axis (not shown) extending through the circular slot **32.** The rotational axis may be determined by the longitudinal axis of the pin (not shown) inserted through the circular slot **32.**

Each plate **48** may have an alignment end **50.** The alignment end **50** may be positioned opposite the free end **30** of the branch **28.** Alignment end **50** may be positioned in the divided portion of the impact portion **22.** Alignment end **50** may be positioned in the divided portion of the impact zone **26.**

The alignment ends **50** of adjacent plates **48** may be mutually aligned. The alignment ends **50** of adjacent plates **48** may be separated by a gap **52.** The alignment end **50** may be v-shaped. Each alignment end **50** may have an apex **54.** Each apex **54** may be aligned with the longitudinal axis **34** of the branch **28.** Each apex **54** may be spaced from the virtual centre point **P.** Each apex **54** may be spaced equidistantly from the virtual centre point **P.**

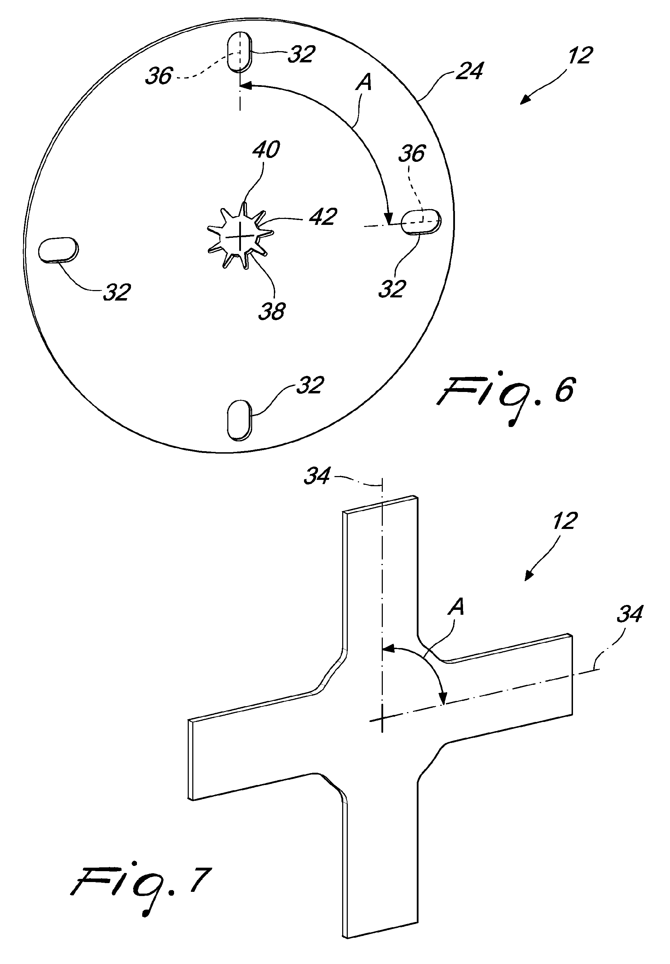

With reference to Fig. 6, in a fifth embodiment, the resilient element **12** may have a disc configuration without branches **28.** A plurality of slots **32** may be radially arranged adjacent the edge **24** of the resilient element **12.** Each slot **32** may be axially extended along a central axis **36.** The axially extended slots may be radially arranged about centre point **P** of the resilient element **12.**

The central axis **36** of each slot **32** may have an angular separation **A** from the central axis **36** of the slot **32.** In an embodiment, the angular separation **A** may be 90 degrees. The resilient element **12** may an aperture **38** positioned in the centre thereof and defined by an edge **42.** In an embodiment, the resilient element **12** may have notches **40** about the aperture **38.**

With reference to Fig. 7, in a sixth embodiment, the resilient element **12** may have four branches **28** without any slots **32.** Longitudinal axis **34** of each branch **28** may have an angular separation of 90 degrees from the longitudinal axis **34** of the adjacent branch **28.** The resilient element **12** without any slots **32** may be combined with the foregoing embodiments.

With reference to Fig. 1, the cover assembly **14** may be positioned at the first side **18** of the resilient element **12.** The cover assembly **14** may be positioned on the first side **18.** Cover assembly **14** may be in contact with the resilient element **12** at the first side **18.**

In an embodiment, the cover assembly **14** may be positioned over the resilient element **12** at the first side **18.** Cover assembly **14** may be positioned vertically over the resilient element **12** at the first side **18.** Cover assembly **14** may not be in contact with the resilient element **12** at the first side **18.**

The cover assembly **14** may surround the impact zone **26.** The impact zone **26** may be exposed through the cover assembly **14.** The cover assembly **14** may have a first void **56.** The first void **56** may be centrally positioned in the cover assembly **14.** First void **56** may be aligned with the impact zone **26.** Centre of first void **56** may be the centre point **P.** Impact zone **26** may receive an impact force through the first void **56.**

Cover assembly **14** may be formed as a first cover. The first cover may be formed as a disc. Outer edge **60** of the first cover may correspond to the free ends **30** of the resilient element **12.** The first cover may have an aperture that corresponds with the first void **56.** The aperture may be centrally positioned on the first cover. The aperture may be aligned with the impact zone **26.** Centre of the aperture may be the centre point **P.** Aperture may have a shape selected to conform to the component that impacts the resilient element **12.** Wall **58** defining the aperture may be aligned with the boundary **27** of the impact zone **26.** Wall **58** may be concentric with the outer edge **60.**

In an alternative embodiment, the cover assembly **14** may be comprised of a plurality of separated cover members (not shown). The cover members may be distributed radially around the resilient element **12.** Cover members may be arranged so as to form an open space (not shown) that corresponds with the first void **56.** The open space may be formed centrally between the cover members. The number of cover members may correspond to the number of branches **28** of the resilient element **12.** With respect to the fifth embodiment of the resilient element **12**, in Fig. 6, the number of cover members may be suitably selected.

The spacer assembly **16** may be positioned at the second side **20.** The spacer assembly **16** may be positioned on the second side **20.** Spacer assembly **16** may be in contact with the resilient element **12** at the second side **20.**

In an embodiment, the impact absorption device **10** may be mounted on the track-type machine (not shown) through the spacer assembly **16.** Spacer assembly **16** may be mounted through the side opposite the side in contact with the resilient element **12.** The spacer assembly **16** may space the resilient element **12** from the mounting surface of the track-type machine so that the impact portion **22** may undergo resilient deformation in a direction towards the mounting surface. In an embodiment, the spacer assembly **16** may guide the resilient element **12** during resilient deformation thereof.

The spacer assembly **16** may surround the impact zone **26** at the second side **20.** The impact zone **26** may be exposed through the spacer assembly **16.** The spacer assembly **16** may have a second void **64.** The second void **64** may be centrally positioned in the spacer assembly **16.** Second void **64** may be aligned with the impact zone **26.** Centre of second void **64** may be the centre point **P.** Impact zone **26** may resiliently deform through the second void **64** when an impact force is received through the first void **56.**

The spacer assembly **16** may comprises a plurality of spacer members **62.** The spacer members **62** may be distributed radially around the resilient element **12.** Spacer members **62** may be arranged such that the second void **64** is formed centrally between the spacer members **62.** The number of spacer members **62** may correspond to the number of branches **28** of the resilient element **12.** With respect to the fifth embodiment of the resilient element **12**, in Fig. 6, the number of spacer members **62** may be suitably selected.

The resilient element **12** may be retained between the cover assembly **14** and spacer assembly **16.** The resilient element **12** may be interposed between the cover assembly **14** and spacer assembly **16.** Resilient element **12** may undergo resilient deformation in a direction substantially orthogonal to the respective planes on which the cover assembly **14** and spacer assembly **16** lie. Impact portion **22** may undergo resilient deformation in a direction substantially orthogonal to the respective planes on which the cover assembly **14** and spacer assembly **16** lie. Impact zone **26** may undergo resilient deformation in a direction substantially orthogonal to the respective planes on which the cover assembly **14** and spacer assembly **16** lie.

Resilient element **12** may be retained between the cover assembly **14** and spacer assembly **16** by at least one pin **66.** Pin **66** may be inserted through the cover assembly **14**, the resilient element **12** and the spacer assembly **16.** Pin **66** may rigidly connect the cover assembly **14** to the spacer assembly **16.**

In an embodiment, a plurality of pins **66** may connect the resilient element **12**, the cover assembly **14** and spacer assembly **16.** The number of pins **66** may correspond to the number of branches **28.** With respect to the fifth embodiment of the resilient element **12**, in Fig. 6, the number of pins **66** may be suitably selected.

Resilient element **12** may be movably retained between cover assembly **14** and spacer assembly **16.** Resilient element **12** may be movably interposed between cover assembly **14** and spacer assembly **16.** The movement of the resilient element **12** may assist in the resilient deformation thereof. The movement of the resilient element **12** may be pre-determined. The movement of the resilient element **12** may be pre-determined by analysis and the determination of the required stroke thereof.

Resilient element **12** may move in a direction substantially parallel to the respective planes on which the cover assembly **14** and spacer assembly **16** lie when not subjected to an impact force.

Resilient element **12** may be movable relative to the pin **66.** Resilient element **12** may movable relative to the cover assembly **14** and the spacer assembly **16.** Pin **66** may be inserted through at least one slot **32** in the resilient element **12.**

The resilient element **12** may movable through the interaction of the pin **66** in the slot **32.** The slot **32** may have a shape such that the resilient element **12** is movable relative to the cover assembly **14** and spacer assembly **16.** Pin **66** may be movable along the axially extended slot **32.** Pin **66** may be movable substantially along the central axis **36** of the slot **32.**

Resilient element **12** may be movable in the direction substantially parallel to the central axis **36** of the slot **32.** In an embodiment, a plurality of pins **66** may be inserted through a respective plurality of slots **32.** The resilient element **12** may be movable in multiple directions relative to the respective pins **66.** Movement of the resilient element **12** may be restricted by the movement of the pins **66** in the respective slots **32.**

In an embodiment, the resilient element **12** may move along direction **X** with respect to pin **66a** and pin **66b** and along direction **Y** with respect to pin **66c** and pin **66d.** Pin **66a** and pin **66b** may move along the linearly aligned central axes **36** of respective slots **32** in opposite branches **28.** Pin **66c** and pin **66d** may move along the linearly aligned central axes **36** of respective slots **32** in opposite branches **28.** The number of directions the resilient element **12** may move is dependent on the number of slots **32** and the respective interacting pins **66.**

In an alternative embodiment, the resilient element **12** may be retained by being sandwiched between the cover assembly **14** and spacer assembly **16.** Resilient element **12** may be slidably sandwiched between the cover assembly **14** and spacer assembly **16.**

The impact absorption device **10** may further comprise a second cover **68.** The second cover **68** may be connected to the spacer assembly **16.** The second cover **68** may be rigidly connected to the spacer assembly **16.** The spacer assembly **16** may be mounted to the second cover **68.** Spacer assembly **16** may be chemically or mechanically mounted to the second cover **68.** In an embodiment, the pins **66** may connect the second cover **68** to the spacer assembly **16.**

In the embodiment with the spacer assembly **16** being comprised of a plurality of spacer members **62**, the spacer members **62** may be distributed radially around the second cover **68.** Spacer members **62** may be arranged such that the second void **64** is formed over the second cover **68.**

Second cover **68** may be connected to the cover assembly **14.** Second cover **68** may be rigidly connected to the cover assembly **14.** Second cover **68** may be connected to the cover assembly **14** though bolts **74.** Bolts **74** may be distributed in alternate with the pins **66.** Spacers **76** may be interposed between the cover assembly **14** and the second cover **68.**

The second cover **68** may be spaced from the resilient element **12.** The spacer assembly **16** may space the resilient element **12** from limit surface **70** of the second cover **68** so that the impact portion **22** may undergo resilient deformation in a direction towards the limit surface **70.** The second cover **68** may limit the resilient deformation of the resilient element **12** at the limit surface **70.** The second cover **68** may limit the resilient deformation of the resilient element **12** before the yield strength point thereof is reached.

Resilient element **12** may undergo resilient deformation in a direction substantially orthogonal to the plane on which the second cover **68** lies. Impact portion **22** may undergo resilient deformation in a direction substantially orthogonal to the plane on which the second cover **68** lies. Impact zone **26** may undergo resilient deformation in a direction substantially orthogonal to the plane on which the second cover **68** lies.

The impact absorption device **10** may be mounted on the track-type machine through the second cover **68.** Second cover **68** may be mounted through the mounting surface **72.** Mounting surface **72** may be the side opposite limit surface **70.**

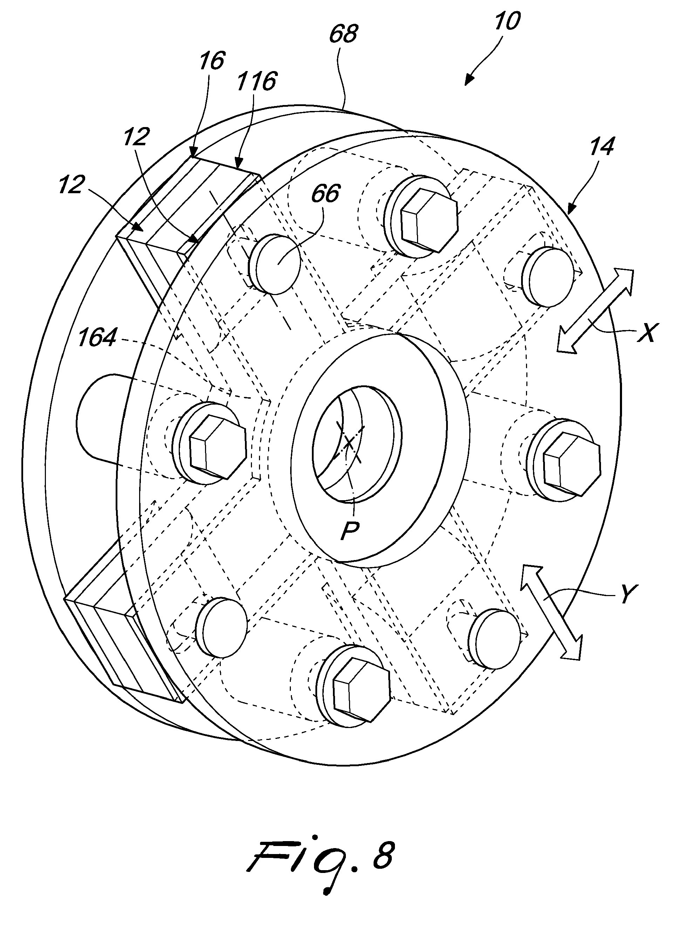

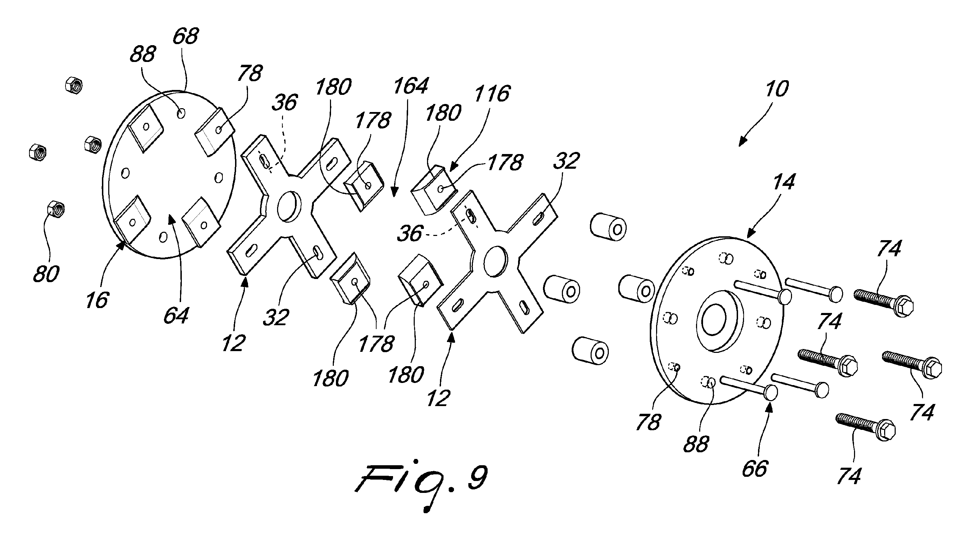

With reference to Figs. 8 and 9, in a second embodiment, the impact absorption device **10** may comprise a plurality of resilient elements **12** positioned between the cover assembly **14** and spacer assembly **16.** The resilient elements **12** may be arranged in layers between the cover assembly **14** and spacer assembly **16.** Resilient elements **12** may be arranged in a stack between the cover assembly **14** and spacer assembly **16.**

The impact absorption device **10** may further comprise the second cover **68** connected to the spacer assembly **16.** The second cover **68** and the cover assembly **14** may be connected by bolts **74** and screws **80.** The second cover **68** may limit the resilient deformations of the resilient elements **12** at the limit surface **70.** The second cover **68** may limit the resilient deformations of the resilient elements **12** before the respective yield strength points thereof are reached. Bolts **74** may be inserted through the bolt holes **88** provided in the cover assembly **14** and the second cover **68.** Bolt holes **88** may be provided in the first embodiment of the impact absorption device **10.**

Resilient elements **12** may be retained by pins **66.** The pins **66** may be inserted through pin holes **78** in the cover assembly **14** and the spacer assembly **16.** Pin holes **78** may be provided in the first embodiment of the impact absorption device **10.** Pins **66** may be inserted through the respective slots **32** in the resilient elements **12.**

At least one intermediate spacer assembly **116** may be interposed between the plurality of resilient elements **12.** The intermediate spacer assembly **116** corresponds to the spacer assembly **16** as described in the foregoing paragraphs. Intermediate spacer assembly **116** may be positioned between resilient elements **12.** Intermediate spacer assembly **116** may be retained by pins **66.** The pins **66** may be inserted through pin holes **178.**

The resilient elements **12** may be movable relative to the intermediate spacer assembly **116.** The resilient elements **12** may be resiliently deformable through the intermediate void **164.** Intermediate spacer assembly **116** may have limit edges **180** to limit the transverse movement of the resilient elements **12.** Movement of the resilient elements **12** along the direction of the central axis **36** of the slots **32** may not be limited by the limit edges **180.** Limit edges **180** may be provided in the spacer assembly **16.** In an embodiment, a plurality of intermediate spacer assemblies **116** may be interposed between the plurality of resilient elements **12.**

With reference to Fig. 10, the impact absorption device **10** may be coupled to a hydraulic adjuster **82.** The hydraulic adjuster **82** may be axially coupled to the impact absorption device **10.** The hydraulic adjuster **82** may be coupled to the resilient element **12** through the first void **56.** The hydraulic adjuster **82** may move relative to the resilient element **12.** The hydraulic adjuster **82** may move in an axial direction **Z** relative to the resilient element **12.** Hydraulic adjuster **82** may move in a direction substantially orthogonal relative to the respective planes on which the resilient element **12**, the cover assembly **14** and the spacer assembly **16** lie.

The axial movement of the hydraulic adjuster **82** towards the impact absorption device **10** may cause the resilient element **12** to resiliently deform. The resilient element **12** may resiliently deform in the direction **Z.** The resilient element **12** may return to the original configuration when the force from the hydraulic adjuster is no longer present. In a second embodiment of the impact absorption device **10**, the plurality of resilient elements **12** may undergo resilient deformation depending on the extent of the axial movement of the hydraulic adjuster **82** towards the impact absorption device **10.**

The impact portion **22** (not shown) may be subjected to the greatest resilient deformation relative to the rest of the resilient element **12.** The impact portion **22** may be subjected to the greatest resilient deformation relative to the branches **28** of the resilient element **12.** In the embodiment with the impact zone **26** (not shown) having a reduced boundary than the impact portion **22**, the impact zone **26** may undergo a greater resilient deformation relative to the rest of the impact portion **22.**

The impact absorption capacity of resilient element **12** may be determined by thickness thereof, mechanical material properties and the stack gap **84** between the resilient elements **12.** A resilient element **12** with a greater thickness may be more rigid, for a given material, and may have a greater response to the received impact. The required response or stroke of the resilient element **12** may be predetermined by Finished Elements Analysis (FEA). The capacity to respond to the received impact may be increased through Heat treatment (HTTR). The stack gap **84** may be varied depending upon the elastic strength of the resilient element **12.**

The impact absorption device **10** of the second embodiment may have a greater impact absorption capacity as a result of having a plurality of resilient elements **12.** With reference to Fig. 10, the resilient element **12**a may be in contact with the hydraulic adjuster **82** and may set the preload trigger. Preload trigger may be the minimum impact force required to commence resilient deformation of the resilient element **12.**

Upon receiving an impact, the hydraulic adjuster **82** that is already in contact with the impact absorption device **10** may move against the impact absorption device **10.** A machine track link (not shown) may keep the contact between the resilient element **12a** and the hydraulic adjuster **82.** In an embodiment, the hydraulic adjuster **82** may be spaced from the impact absorption device **10** and may move towards and against the impact absorption device **10.**

The resilient element **12a** may undergo resilient deformation into the stack gap **84.** If the impact force from the hydraulic adjuster **82** is sufficiently large resilient element **12a** may resiliently deform to come into contact and effect resilient deformation in resilient element **12b.** At that point both resilient elements **12a, 12b** may combine to absorb the impact from the hydraulic adjuster **82.** The resilient elements **12a**, **12b** may be resiliently deformed until the impact force is balanced by the combined elastic strengths of resilient elements **12a**, **12b** or until contact is made with the limit surface **70.** As the impact force dissipates the resilient elements **12a, 12b** may return to their original configurations. The impact absorption capacity of resilient element **12** may be increased by the slots **32.** The slots **32** enable the branches **28** to move relative to the pins **66.**

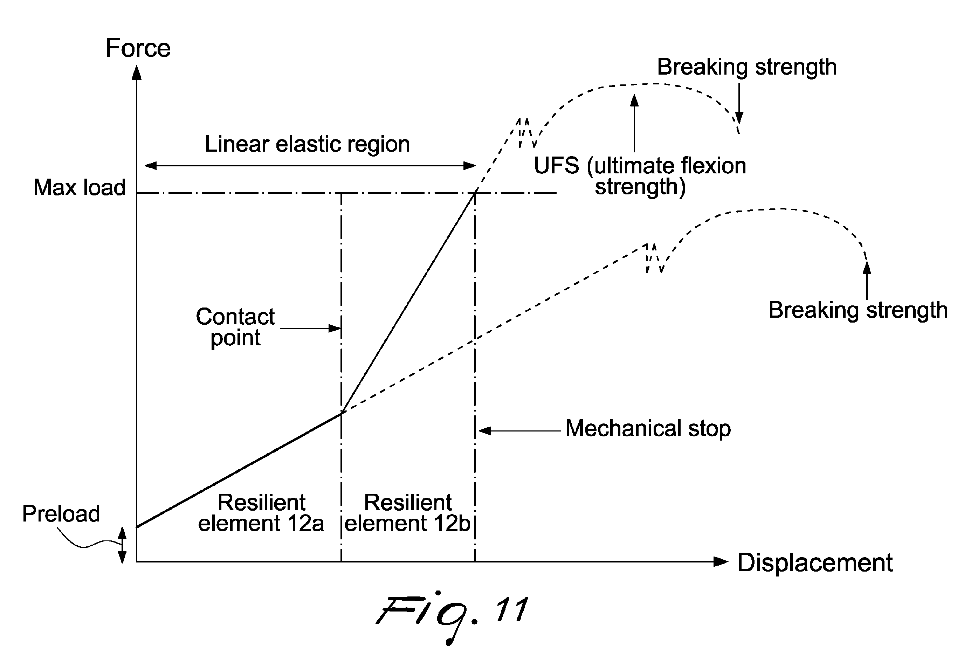

Fig. 11 illustrates the relationship between the resilient element **12a** and resilient element **12b.** Resilient elements **12a**, **12b** may have different response or stroke to an impact force. Resilient element **12a** may determine the preload trigger of the impact absorption device **10.** The maximum load may be determined by the combined load of the resilient elements **12a, 12b.** Resilient element **12a** may contact resilient element **12a** at the contact point. The second cover **68** may serve as a mechanical stop for resilient elements **12a, 12b** before the respective yield strength points are reached.

Fig. 12 illustrates a track roller frame **100.** The track roller frame **100** may comprise a housing **86**; the impact absorption device **10** mounted in the housing **86**; and the hydraulic adjuster **82** mounted in the housing **86**, the hydraulic adjuster **82** being axially coupled to the impact absorption device **10** through the first void **56.**

The invention may generally relate to impact absorption through flexion. An impact may be absorbed by flexion of the resilient element **12.** The resilient element **28** may be positioned to absorb the impact. In an embodiment, the resilient element **12** may be positioned on a structural element that is subject to an impact. The resilient element **12** may be positioned on an end of the the hydraulic adjuster **82** opposite the end subject to the impact. The branches **28** may be inclined away from the hydraulic adjuster **82.** Branches **28** may be configured to impact on an impact surface. In an alternative embodiment, the branches **28** may be coupled to the housing **86** of the track roller frame **100.**

The skilled person would appreciate that foregoing embodiments may be modified or combined to obtain the impact absorption device **10** of the present disclosure.

### Industrial Applicability

This disclosure describes the impact absorption device **10.** The impact absorption device **10** may absorb impacts to tracks of the track type machine. The impact absorption device **10** may absorb frontal impacts to tracks of the track type machine. Frontal impacts may be impacts received around the front idler **102** of the track roller frame **100.**

The impact absorption device **10** may prevent also the track roller frame from becoming packed with mud, soil or stone present at a work site. The impact absorption device **10** may prevent packing of mud, soil or stone in the front idler **102** and in the kinematic system of the track roller frame **100.** The kinematic systems may be include components between the hydraulic adjuster **82** and the front idler **102.** The impact absorption device **10** may prevent packing of mud, soil or stone between front idler **102** and the track link. The impact absorption device **10** may also provide a horizontal load. The horizontal load may maintain between the hydraulic adjuster **82** and the front idler **102.**

The impact absorption device **10** may have at least one resilient element **12** that resiliently deforms when subjected to an impact force that exceeds a predetermined threshold. The resilient element **12** of the impact absorption device **10** may return to its original conformation when the impact force no longer exceeds the predetermined threshold so as to provide tension to the tracks.

The impact absorption device **10** may be installed in the track type machine in a non-deformed state. In the non-deformed state the resilient element **12** may not be deformed. The impact device **10** may not be under tension when installed. The absence of installation without tension may have advantages such as ease of installation, material reduction, cost reduction and reduction in overall occupied space.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. An impact absorption device (10) for a track roller frame, the impact absorption device (10) comprising:
a resilient element (12) having a first side (18) and a second side (20), the resilient element (12) having an impact zone (26) extending between the first side (18) and the second side (20);
a cover assembly (14) positioned at the first side (18) surrounding the impact zone (26), the cover assembly (14) defining a first void (56) aligned with the impact zone (26); and
a spacer assembly (16) positioned at the second side (20) surrounding the impact zone (26), the spacer assembly (16) defining a second void (64) aligned with the impact zone (26) wherein the resilient element (12) is retained between the cover assembly (14) and spacer assembly (16) such that the impact zone (26) is resiliently deformable through the second void (64).

2. The impact absorption device (10) according to claim 1 wherein the resilient element (12) has a plurality of radially extending branches (28) positioned between the cover assembly (14) and spacer assembly (16).

3. The impact absorption device (10) according to claim 2 wherein the resilient element (12) comprises a plurality of plates (48) wherein each plate has a branch (28).

4. The impact absorption device (10) according to claim 3 wherein each plate (48) has an alignment end (50) opposite a free end (30) of the branch (28), the alignment ends (50) of adjacent plates (48) being mutually aligned and being separated by a gap (52).

5. The impact absorption device (10) according to claims 1, 2, 3 or 4 wherein the resilient element (12) has an aperture (38) positioned in the impact zone (26).

6. The impact absorption device (10) according to claim 5 wherein the edge (42) defining the aperture (38) has a series of notches (40) extending laterally into the resilient element (12).

7. The impact absorption device (10) according to any one of preceding claims wherein the resilient element (12) is connected to the cover assembly (14) and the spacer assembly (16) through at least one pin (66).

8. The impact absorption device (10) according to claim 7 wherein resilient element (12) has at least one slot (32) for receiving the at least one pin (66), the slot (32) having a shape such that the resilient element (12) is movable relative to the pin (66).

9. The impact absorption device (10) according to any one of the preceding claims wherein the cover assembly (14) is formed as a first cover having an aperture, the aperture corresponding with the first void (56).

10. The impact absorption device (10) according to any one of the preceding claims further comprising a second cover (68), the second cover (68) being connected to the spacer assembly (16) and being spaced from the resilient element (12).

11. The impact absorption device (10) according to claim 10 wherein the second cover (68) limits the resilient deformation of the resilient element (12).

12. The impact absorption device (10) according to any one of preceding claims wherein the resilient element (12) is flat and lies on a plane and wherein the resilient element (12) is resiliently deformable in a direction orthogonal to the plane.

13. The impact absorption device (10) according to any one of preceding claims further comprising a plurality of resilient elements (12) positioned between the cover assembly (14) and the spacer assembly (16) wherein at least one intermediate spacer assembly (116) is interposed between the plurality of resilient elements (12).

14. The impact absorption device (10) according to any one of preceding claims wherein the spacer assembly (16) comprises a plurality of spacer members (62).

15. A track roller frame (100) comprising:
a housing (86);
the impact absorption device (10) according to any one of preceding claims, the impact absorption device (10) being mounted in the housing (86); and
a hydraulic adjuster (82) mounted in the housing (86), the hydraulic adjuster (82) being axially coupled to the impact absorption device (10) through the first void (56).
